# EUROPÄISCHE PATENTANMELDUNG

(11) **EP 0 853 211 A1**
(43) Veröffentlichungstag der Anmeldung: **15.07.1998**
(21) Anmeldenummer: 97123033.9
(22) Anmeldetag: 31.12.1997
(51) Int. Cl.: F16L 55/26, F16L 55/28

(54) **Roboter und Roboterarm zur Kanalsanierung**

(30) Priorität: 10.01.1997 DE 29700298 U
(71) Anmelder: Scheiff GmbH, 53881 Euskirchen (DE)
(72) Erfinder: Sigel, Alwin, 6111 Martin (AU)
(74) Vertreter: Selting, Günther, Dipl.-Ing.

(57) **Zusammenfassung**

Ein Roboter zur Kanalsanierung weist eine Fahreinheit auf, die in einem mit Rädern (7,9) versehenen Fahrgehäuse (1) von einem Fahrmotor (2) angetrieben wird. Das Fahrgehäuse (1) ist mit einem Drehkopf (15) verbunden, der dem Fahrgehäuse unmittelbar vorgesetzt ist. Der Drehkopf (15), der Arbeitswerkzeuge und/oder Inspektionseinrichtungen trägt, wird von einem Drehmotor (22) angetrieben. Der Fahrmotor (2) und der Drehmotor (22) sind überlappend angeordnet. Ferner ist der Drehkopf (15) mit einer sich durch das gesamte Fahrgehäuse (1) erstreckenden Hohlwelle (23) verbunden. An dem Drehkopf (15) ist ein Roboterarm mit Werkzeugträger befestigbar. Sowohl ein Schwenkarm des Roboterarms als auch der Werkzeugträger sind über Druckzylinder schwenkbar. Ferner ist der Ausleger an seinem dem Drehkopf abgewandten Ende mit einem Stützrad verbunden.

## Beschreibung

Die Erfindung betrifft einen Roboter zur Kanalsanierung.

Zur Sanierung nicht begehbarer Kanäle ist es bekannt, Roboter einzusetzen. Mit Hilfe solcher Roboter, die über einen Antrieb zum Durchfahren von Kanälen verfügen, werden beispielsweise Kanäle gereinigt, Unebenheiten oder Überstände abgeschliffen oder Ausbesserungen von Leckagen vorgenommen.

Hierzu ist ein mehrgliedriger Roboter mit Drehkopf bekannt, an welchen ein Roboterarm mit unterschiedlichen Bearbeitungswerkzeugen sowie mit einer Kamera montiert ist. Mit Hilfe eines Drehmotors kann der Drehkopf und der mit diesem verbundene Roboterarm um bis zu 500° um die Längsachse gesteuert gedreht werden. Im Anschluß an den Drehmotor, der sich über Stützräder an der Kanalwand abstützt, ist ein Schalt- und Relaisteil angeordnet, mittels welchem die Funktionen des Motors gesteuert werden.

Wird der Roboter beispielsweise zum Ausfüllen von Leckagen oder anderer Zwischenräume eingesetzt, so befindet sich im Anschluß an das Schalt- und Relaisteil ein Auspreßbehälter. Das zu verarbeitende Material wird aus dem Auspreßbehälter über einen Schlauch zu dem am Drehkopf befindlichen Werkzeug transportiert und von diesem verarbeitet.

Im Anschluß an den Auspreßbehälter ist eine Fahreinheit vorgesehen, mittels welcher der mehrgliedrige Roboter durch einen zu sanierenden Kanal gefahren wird. Hierzu weist die Fahreinheit, welche als Lokomotive dient, mehrere über einen Fahrmotor angetriebene Räder auf.

Aufgrund einer Gesamtlänge des bekannten Roboters zur Kanalsanierung von etwa 120 cm ist dieser Roboter in kurzen Kanälen, wie beispielsweise in Grundstückentwässerungskanälen oder Industrie-Abwasserkanälen, insbesondere da solche Kanäle häufig sehr schwer zugänglich sind, nicht einsetzbar. Es ist bisweilen lediglich möglich, die einzelnen Glieder des langgestreckten Roboters einzeln in den Kanal einzuführen und direkt am Kanaleingang wieder zusammenzusetzen. Ein solches Vorgehen ist äußerst zeitaufwendig und schwierig.

Aus EP 0 618 398 A1 ist ein Roboter zum Einsatz in nicht begehbaren Rohrleitungen bekannt, der innerhalb eines Fahrgehäuses einen die Räder antreibenden Fahrmotor und einen einen Drehkopf antreibenden Drehmotor aufweist, wobei sich der Fahrmotor und der Drehmotor überlappen. Je nach Art des an dem Drehkopf befestigten Werkzeugs oder Inspektionsinstruments muß der Drehkopf beispielsweise sehr schnell, sehr genau oder mit hohem Drehmoment bewegt werden können. Um diese unterschiedlichen Anforderungen mit dem bekannten Roboter zu realisieren, sind aufwendige Umrüstarbeiten an dem Roboter erforderlich.

Aufgabe der Erfindung ist es, einen Roboter zur Kanalsanierung zu schaffen, der eine kompakte Bauform hat, auch unter ungünstigen Platzverhältnissen einsetzbar ist und einfach an unterschiedliche Anforderungen anpaßbar ist.

Erfindungsgemäß ist diese Aufgabe durch die Merkmale des Anspruchs 1 gelöst. Vorteilhafte Weiterbildungen sind Gegenstand der Unteransprüche.

Erfindungsgemäß weist der Roboter zur Kanalsanierung eine Fahreinheit auf, die in einem mit Rädern versehenen Fahrgehäuse einen die Räder antreibenden Fahrmotor enthält. Ferner ist der Fahreinheit, welche die Lokomotive des Roboters bildet, ein Drehkopf, an welchem Arbeitswerkzeuge und/oder Inspektionseinrichtungen angebracht sind, unmittelbar vorgesetzt. Der Drehkopf ist mittels eines Drehmotors angetrieben, der so angeordnet ist, daß sich der Fahrmotor und der Drehmotor überlappen.

Aufgrund der Anordnung des Drehkopfes direkt am Fahrgehäuse sowie aufgrund des Überlappens der beiden Motoren, die somit nebeneinander oder übereinander angeordnet sind, ist die Länge des erfindungsgemäßen Roboters zur Kanalsanierung gegenüber bekannten Robotern erheblich verkürzt. Aufgrund der somit verwirklichten kurzen Bauform kann dieser Roboter auch in beengten Verhältnissen eingesetzt werden. Ferner entfällt ein Zusammensetzen des Roboters im Kanal, so daß hierbei ggf. auftretende Fehler, wie beispielsweise Dichtigkeits- oder Kontaktprobleme zwischen den einzelnen Gliedern, vermieden sind. Der erfindungsgemäße Roboter ist somit vielseitiger einsetzbar.

Erfindungsgemäß ist der Drehmotor außerhalb des Fahrgehäuses auf diesem montiert. Das getriebeseitige Ende des Drehmotors ragt in das Fahrgehäuse hinein und ist mit dem Drehkopf verbunden. Der Drehmotor kann daher auf einfache Weise aus dem Fahrgehäuse herausgezogen und durch einen anderen Drehmotor, dessen getriebeseitiges Ende lediglich in das Fahrgehäuse hineingesteckt wird, ersetzt werden. Somit kann der Drehmotor auf einfache Weise schnell gewechselt werden, wenn beispielsweise ein leistungsstärkerer Drehmotor erforderlich ist. Ein Montieren des Drehmotors außerhalb des Fahrgehäuses vereinfacht ferner die Montage des Roboters.

Vorzugsweise ist der Drehkopf mit einer Hohlwelle verbunden, die sich durch das gesamte Fahrgehäuse erstreckt. Somit können die Steuer- und Antriebsleitungen oder Schläuche für die Materialzufuhr auf einfache Weise von den Werkzeugen und/oder Inspektionseinrichtungen über den Drehkopf durch das Fahrgehäuse nach hinten geführt werden.

Da der Drehkopf fest mit der Hohlwelle verbunden ist, ist es möglich, den Drehkopf gegen Herausziehen nach vorne, d.h. in Richtung der Arbeitswerkzeuge, an dem dem Drehkopf abgewandten rückwärtigen Ende des Fahrgehäuses zu sichern. Dies hat insbesondere den Vorteil, daß im Bereich des Drehkopfs kein Platz zur Sicherung desselben gegen Herausziehen erforderlich ist.

Soll mit Hilfe des Roboters beispielsweise zum Füllen von Fugen Material in den Kanal eingebracht werden, so kann an dem rückwärtigen, d.h. dem Drehkopf abgewandten, Ende des Fahrgehäuses über ein Kupplungsteil ein Auspreßbehälter angeordnet werden.

Die Erfindung betrifft ferner einen mit dem Drehkopf eines Roboters zur Kanalsanierung verbundenen Roboterarm.

Zum Bearbeiten der Kanalwand, beispielsweise zum Abschleifen von Unebenheiten oder zum Ausbessern von Rissen, sind an dem mit dem Drehkopf verbundenen Roboterarm Werkzeuge und ggf. zur Beobachtung eine Kamera montiert. Aufgrund der beim Bearbeiten der Kanalwand auftretenden Kräfte kommt es häufig vor, daß der den Drehkopf tragende Teil des Roboters kippt. Hierbei ist ein eindeutiges Führen des Werkzeugs und somit ein einwandfreies Bearbeiten der Kanalwand nicht mehr möglich. Die von einem Werkzeug auf die Kanalwand aufbringbaren Kräfte sind daher begrenzt.

Aufgabe der Erfindung ist es ferner, den Roboterarm eines Roboters zur Kanalsanierung zu verbessern.

Erfindungsgemäß ist die Aufgabe nach den Merkmalen des Anspruchs 6 gelöst. Vorteilhafte Weiterbildungen sind Gegenstand der Unteransprüche.

Der Roboter zur Kanalsanierung weist eine Fahreinheit mit von einem Fahrmotor angetriebenen Rädern und einen von dem Drehmotor angetriebenen Drehkopf auf, der mit einem erfindungsgemäßen Roboterarm verbunden ist.

Um ein Kippen des Roboters bei hohen Bearbeitungskräften zu vermeiden, ist an dem dem Drehkopf abgewandten Ende des Roboterarms ein Stützrad vorgesehen. Somit können vom Roboterarm höhere Bearbeitungskräfte aufgenommen werden. Da das Abstützen des Roboterarms mittels eines Stützrades realisiert ist, kann der Roboter bei abgestütztem Roboterarm in Kanallängsrichtung bewegt werden. Dies hat den Vorteil, daß mit dem Roboterarm auch Werkzeuge verbunden sein können, deren Gewicht ansonsten bereits zum Kippen des Roboters führen würde. Das Stützrad ist vorzugsweise bezüglich eines mit dem Roboterarm verbundenen Werkzeugträger auf der gegenüberliegenden Seite angeordnet. Aufgrund des durch das Vorsehen eines Stützrades realisierten günstigen Kraftverlaufs kann der Roboterarm sehr schlank ausgebildet werden.

Um den Roboterarm weiterhin durch den Drehkopf drehen zu können, paßt sich die Stellung des Stützrades vorzugsweise der Bewegung des Roboterarms an. Hierzu ist beispielsweise das Stützrad um eine Achse, die senkrecht zur Drehachse des Stützrades ist, drehbar. Somit richtet sich das Stützrad je nach Bewegungsrichtung des Roboterarms selbsttätig aus.

Vorzugsweise weist der Roboterarm einen Schwenkarm und einen Stützarm auf, die gelenkig miteinander verbunden sind. Das Stützrad ist am Stützarm befestigt, so daß dieses aufgrund des Gelenks auch beim Schwenken des Schwenkarms stets an der Kanalwand anliegt. Um ein Verschieben des Stützrades während der Bearbeitung der Kanalwand zu vermeiden, ist die gelenkige Verbindung, die vorzugsweise als Doppelgelenk ausgebildet ist, feststellbar.

Bei sehr hohen Arbeitskräften kann es trotz des Stützrades vorkommen, daß der Drehkopf bzw. das werkzeugseitige Ende des Roboters um das werkzeugseitige Rad des Roboters kippt. Aufgrund einer solchen Verschiebung des Drehkopfes ist die Genauigkeit der Werkzeugführung beeinträchtigt. Daher ist erfindungsgemäß an dem dem Drehkopf zugewandten Ende des Roboterarms zusätzlich ein Stützfuß angeordnet. Da der Werkzeugträger zwischen dem Stützfuß und dem Stützrad angeordnet ist, werden die Bearbeitungskräfte im wesentlichen von dem Stützrad und dem Stützfuß aufgenommen, so daß ein Kippen des Roboters und damit verbundenes Beeinträchtigen der Lage des Werkzeugs ausgeschlossen ist.

Da von dem Stützfuß auch Kräfte in Kanallängsrichtung aufgenommen werden müssen, kann als Stützfuß keine in Kanallängsrichtung drehbare Stützrolle verwendet werden. Somit ist es erforderlich, den Stützfuß im Fahrbetrieb zurückzuziehen bzw. gegenüber der Kanalwand anzuheben. Erfindungsgemäß wird der Stützfuß im Fahrbetrieb mittels einer Feder angehoben. Durch die beim Zustellen eines Werkzeugs in Richtung der Kanalwand hervorgerufenen Kräfte wird der Stützfuß entgegen der Federkraft gegen die Kanalwand gedrückt. Somit berührt der Stützfuß lediglich während der Bearbeitung die Kanalwand.

Vorzugsweise ist der Stützfuß als Rad ausgebildet, dessen Drehachse in Kanal- bzw. Roboterlängsrichtung verläuft. Somit ist einerseits ein Abrollen des Stützfußes in Umfangsrichtung an der Kanalwand beim Drehen des Roboterarms mittels des Drehkopfs möglich und andererseits weiterhin verhindert, daß das Rad des Stützfußes in Kanallängsrichtung rollen kann.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht einer bevorzugten Ausführungsform des erfindungsgemäßen Roboters,
- Fig. 2: eine schematische Seitenansicht einer bevorzugten Ausführungsform des erfindungsgemäßen mit dem Roboter verbundenen Roboterarms und
- Fig. 3: eine Schnittansicht entlang der Linie III-III in Fig. 2.

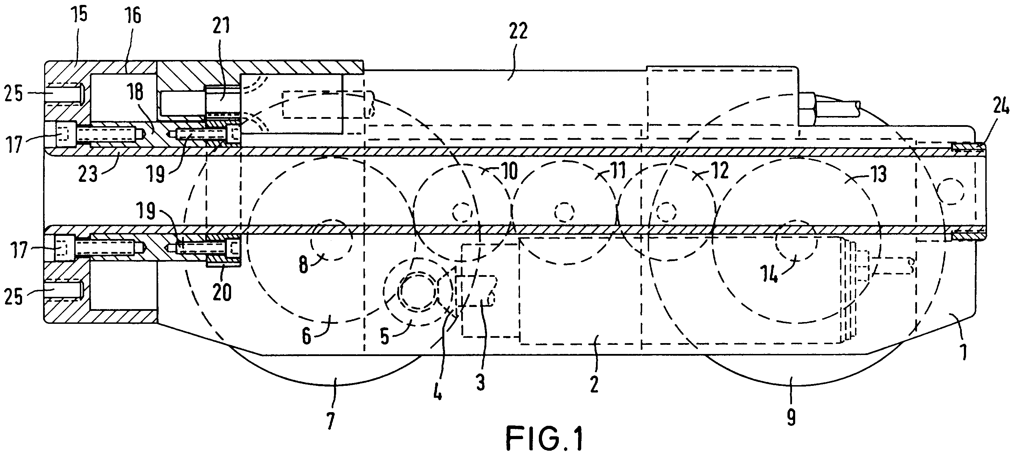

In der in Fig. 1 dargestellten schematischen Seitenansicht ist ein Roboter zur Kanalsanierung dargestellt, der in einem Fahrgehäuse 1 einen Fahrmotor 2 aufweist. An der Abtriebswelle 3 des Fahrmotors 2 ist ein Kegelrad 4 vorgesehen, das mit einem senkrecht zu dem Kegelrad 4 angeordneten zweiten Kegelrad 5 in kämmendem Eingriff steht. Die Verzahnung des Kegelrads 5 greift in eine komplementäre Verzahnung eines Zahnrads 6 ein, das fest mit einem Rad 7 verbunden ist. Das Rad 7 ist auf einer Achse 8 in dem Fahrgehäuse 1 drehbar gelagert.

Zum Antrieb eines zweiten Rades 9 ist das Zahnrad 6 über drei ebenfalls im Fahrgehäuse 1 gelagerte Zahnräder 10,11,12 mit einem Zahnrad 13 in Eingriff. Das Zahnrad 13 ist wiederum fest mit dem Rad 9 verbunden, das auf einer Achse 14 drehbar im Fahrgehäuse 1 gelagert ist. Die den beiden Rädern 7,9 gegenüberliegenden Räder sind ebenfalls von dem Fahrmotor 2, der Abtriebswelle 3 und dem Kegelrad 4 mittels eines entsprechenden (nicht dargestellten) Getriebes angetrieben, so daß alle vier Räder des Roboters angetrieben sind.

Ferner weist der Roboter einen mit dem Fahrgestell 1 drehbar verbundenen Drehkopf 15 auf, der um die Längsachse des Fahrgestells 1 drehbar ist. Der Drehkopf 15 ist über eine Gleitfläche 16 drehbar an dem Fahrgehäuse 1 gelagert. Über Bohrungen 25 sind Werkzeuge oder andere Vorrichtungen mit dem Drehkopf 15 verbindbar. Mittels Schrauben 17 ist der Drehkopf 15 mit einer Hülse 18 verbunden, die wiederum über Schrauben 19 mit einem Zahnrad 20 verbunden ist. Das Zahnrad 20 wird von einem Zahnrad 21 angetrieben, das wiederum von einem Drehmotor 22 antreibbar ist. Somit ist der Drehkopf 15 durch den Drehmotor 22 drehbar. Ferner ist an dem Drehkopf 15 ein Drehanschlag vorgesehen, der die maximale Drehung auf 500° beschränkt.

Ferner ist mit dem Drehkopf 15 eine Hohlwelle 23 fest verbunden, indem die Hohlwelle 23 in die fest mit dem Drehkopf 15 verbundene Hülse 18 eingepreßt ist. Die Hohlwelle 23 erstreckt sich in Längsrichtung durch das gesamte Fahrgehäuse 1. An dem dem Drehkopf 15 abgewandten, rückwärtigen Ende des Fahrgehäuses 1 ist die Hohlwelle 23 durch eine Mutter 24 gegen Herausziehen des Drehkopfs 15 in Fig. 1 nach links gesichert.

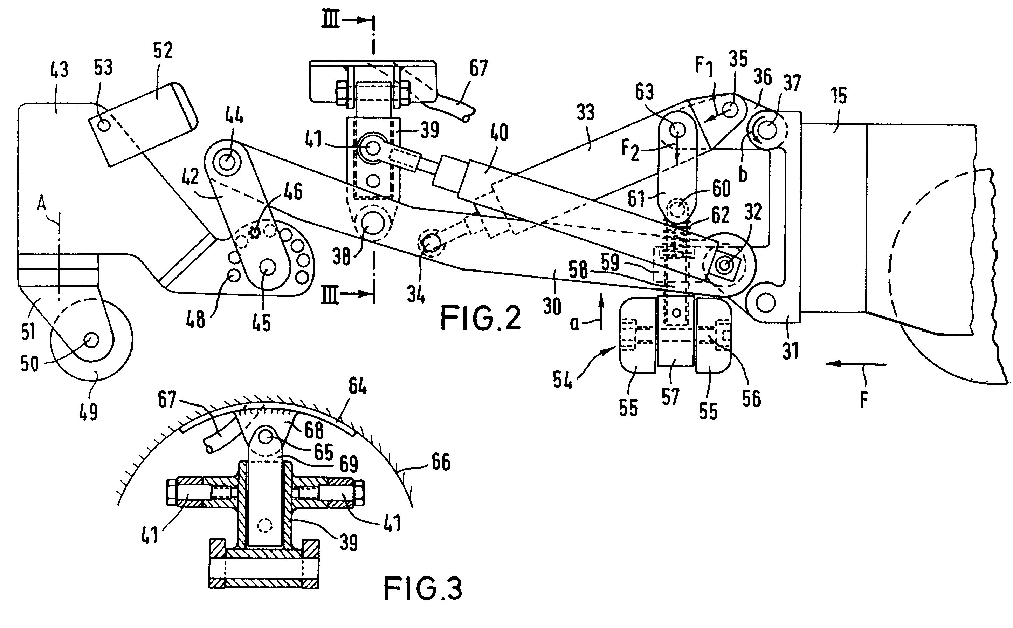

In Fig. 2 ist eine schematische Ansicht einer bevorzugten Ausführungsform eines mit dem Roboter zur Kanalsanierung verbundenen Roboterarms dargestellt. Der Roboterarm ist über ein Aufnahmeteil 31 mit dem Drehkopf 15 verbunden. Ein Schwenkarm 30 des Roboterarms ist um einen Bolzen 32 schwenkbar. Hierzu ist der Schwenkarm 30 mit einem Hydraulikzylinder 33 über einen Bolzen 34 verbunden. Der Hydraulikzylinder 33 ist ferner mit einem Bolzen 35 an einem dreieckförmigen Umlenkteil 36 drehbar befestigt, welches ebenfalls drehbar über einen Bolzen 37 mit dem Aufnahmeteil 31 verbunden ist.

Ferner ist über einen Bolzen 38 der Schwenkarm 30 mit einem Werkzeugträger 39 verbunden. Der Werkzeugträger 39 ist mittels eines Hydraulikzylinders 40, der mittels eines Bolzens 41 an dem Werkzeugträger 39 und mittels des Bolzens 32 an dem Aufnahmeteil 31 befestigt ist, um den Bolzen 38 schwenkbar. Der Werkzeugträger 39 dient zur Aufnahme eines später anhand Fig. 3 erläuterten Werkzeugs oder eines beliebigen anderen in der Kanalsanierung eingesetzten Werkzeugs.

Das von dem Drehkopf 15 abgewandte Ende des Schwenkarms 30 ist über ein stabförmiges Zwischenteil 42 mit einem Stützarm 43 des Roboterarms verbunden. Das Zwischenteil 42 ist sowohl mit dem Schwenkarm 30 über einen Bolzen 44 als auch mit dem Stützarm 43 über einen Bolzen 45 drehbar verbunden, so daß zwischen dem Schwenkarm 30 und dem Stützarm 43 ein Doppelgelenk ausgebildet ist. Das Gelenk zwischen dem Zwischenteil 42 und dem Stützarm 43 ist feststellbar, indem ein Stift 46 sowohl in eine in dem Zwischenteil 42 vorgesehene Bohrung sowie in eine der in dem Stützarm 43 vorgesehenen Bohrung 48 gesteckt wird. Die Bohrungen 48 sind entlang einer Kreislinie angeordnet, so daß unterschiedliche Winkelstellungen zwischen dem Zwischenteil 42 und dem Stützarm 43 realisierbar sind.

Zur Abstützung des Schwenkarms 30 weist der Stützarm 43 ein Stützrad 49 auf, das um eine Drehachse 50 drehbar ist, welche in einem Aufnahmeteil 51 gelagert ist. Das Aufnahmeteil 51 ist um eine senkrecht zur Drehachse 50 verlaufende Achse A drehbar, so daß sich die Stellung des Stützrades 49 stets automatisch an die Umgebungsbedingungen anpaßt.

Ferner ist an dem Stützarm 43 ein Zusatzinstrument, beispielsweise eine Kamera 52, angeordnet. Mit der Kamera 52 kann die Funktion und die Lage des an dem Werkzeugträger 49 befestigten Werkzeugs kontrolliert werden. Die Kamera 52 ist um eine Achse 53 schwenkbar.

Des weiteren ist an dem dem Drehkopf 15 zugewandten Ende ein Stützfuß 54 angeordnet, der im Fahrbetrieb von der Kanalwand abgehoben ist. Der Stützfuß 54 weist in der in Fig. 2 dargestellten Ausführungsform zwei Rollen 55 auf, die quer zur Fahrtrichtung F über eine Achse 56 in dem Basisteil 57 des Stützfußes 54 drehbar gelagert sind. Das Basisteil 57 ist fest mit einem Kolben 58 verbunden, der in einem Ansatz 59 des Aufnahmeteils 31 verschiebbar und über einen Bolzen 60 drehbar mit einem Umlenkteil 61 verbunden ist. Der Stützfuß 54 wird von einer Feder 62 in Richtung des Pfeils a von der Kanalwand im Fahrbetrieb, d.h. wenn der Roboter in dem Kanal fährt und daher keine Bearbeitung der Kanalwand mittels eines Werkzeugs durchgeführt wird, abgehoben. Das stabförmige Umlenkteil 61 ist ebenfalls drehbar über einen Bolzen 63 mit dem dreieckförmigen Umlenkteil 36 verbunden, mit dem auch der Zylinder 33 verbunden ist.

Im folgenden wird das Absenken des Stützfußes 54 beschrieben. Bei stehendem Roboter wird der Schwenkarm 30 mit Hilfe des Hydraulikzylinders 33 in Fig. 2 nach oben um den Bolzen 32 geschwenkt, um das an dem Werkzeugträger 39 befestigte Werkzeug an die Kanalwand heranzuführen. Hierbei wird der Hydraulikzylinder 33 verkürzt, so daß auf den Bolzen 35 eine Kraft F₁ in Richtung des Bolzens 34 wirkt. Da der Hydraulikzylinder 33 über den Bolzen 35 an dem dreieckförmigen Umlenkteil 36 drehbar befestigt ist und dieses ebenfalls drehbar über den Bolzen 37 mit dem Aufnahmeteil 31 verbunden ist, wird das dreieckförmige Umlenkteil 36 aufgrund der Kraft F₁ in Richtung des Pfeils b um den Bolzen 37 gedreht. Somit wirkt auf das stabförmige Umlenkteil 61 über den Bolzen 63 eine Kraft F₂ in Fig. 2 nach unten. Aufgrund der Kraft F₂ wird der Stützfuß 54 entgegen der Federkraft einer Feder 62 in Fig. 2 nach unten bewegt. Somit wird beim Zustellen des Werkzeugs der Stützfuß 54 gegen die Kanalwand gedrückt.

Sobald das Werkzeug wieder von der Kanalwand zurückgezogen wird, wird auch der Stützfuß 54 durch die Feder 62, die sich an dem Ansatz 59 des Aufnahmeteils 31 abstützt, von der Kanalwand abgehoben. Es ist somit sichergestellt, daß der Stützfuß 54 im Fahrbetrieb stets von der Kanalwand abgehoben ist. Da das Abheben des Stützfußes 54 mittels der Feder 62 automatisch erfolgt, sobald das Werkzeug von der Kanalwand zurückgezogen wird, kann das Abheben des Stützfußes 54 vom Bediener nicht vergessen werden, so daß der Stützfuß 54 das Weiterfahren des Roboters nicht behindert.

In Fig. 3 ist eine schematische Schnittansicht entlang der Linie III-III in Fig. 2 dargestellt, in der beispielhaft ein mit dem Werkzeugträger 39 verbundenes Werkzeug dargestellt ist. Hierbei handelt es sich um ein Injektionswerkzeug, mit welchem Dichtmasse in in einer Kanalwand vorhandene Risse einspritzbar ist. Hierzu sind mit dem Werkzeugträger 39 Ansätze 68 eines Injektionsfußes 64 über einen Bolzen 65 und ein Verbindungsteil drehbar verbunden. Die Krümmung des Injektionsfußes 64 entspricht der Krümmung der durch einen Kreisbogen 66 dargestellten Kanalwand. Über einen Schlauch 67 wird die zu verspritzende Dichtmasse zugeführt. Der Schlauch 67 ist von dem Injektionsfuß durch die Hohlwelle 23 zum rückwärtigen, dem Drehkopf 15 abgewandten Ende des Roboters (Fign. 1 und 2) zu einem Vorratsbehälter geführt.

Des weiteren ist aus Fig. 3 ersichtlich, daß der Werkzeugträger 39 von zwei, in Fig. 2 hintereinanderliegenden Hydraulikzylindern 40, die über die Bolzen 41 mit dem Werkzeugträger 39 verbunden sind, geschwenkt wird.

## Patentansprüche

1. Roboter zur Kanalsanierung, mit einer Fahreinheit, die in einem mit Rädern (7,9) versehenen Fahrgehäuse (1) einen die Räder (7,9) antreibenden Fahrmotor (2) enthält und mit einem von einem Drehmotor (22) antreibbaren Drehkopf (15), der Arbeitswerkzeuge und/oder Inspektionseinrichtungen trägt, wobei der Fahrmotor (2) und der Drehmotor (22) einander überlappend angeordnet sind,
**dadurch gekennzeichnet,**
daß der Drehkopf (15) dem Fahrgehäuse (1) der Fahreinheit unmittelbar vorgesetzt ist und der Drehmotor (22) als separate Einheit auf dem Fahrgehäuse (1) montiert ist und mit seinem getriebeseitigen Ende in ein Gehäuseteil des Fahrgehäuses (1) hineinragt.

2. Roboter nach Anspruch 1, dadurch gekennzeichnet, daß der Drehkopf (15) mit einer sich durch das gesamte Fahrgehäuse (1) erstreckenden Hohlwelle (23) verbunden ist.

3. Roboter nach Anspruch 2, dadurch gekennzeichnet, daß die Hohlwelle (23) an ihrem dem Drehkopf (15) abgewandten, rückwärtigen Ende des Fahrgehäuses (1) gegen Herausziehen nach vorne gesichert ist.

4. Roboter nach Anspruch 2 oder 3, dadurch gekennzeichnet, daß die Hohlwelle (23) an ihrem dem Drehkopf (15) abgewandten, rückwärtigen Ende ein Kupplungsteil zum Ankuppeln eines Auspreßbehälters aufweist.

5. Roboter nach einem der Ansprüche 1-4, dadurch gekennzeichnet, daß ein Schalt- und Relaisteil im Fahrgehäuse (1) untergebracht ist.

6. Roboter zur Kanalsanierung, mit einer Fahreinheit, die in einem mit Rädern (7,9) versehenen Fahrgehäuse (1) einen die Räder (7,9) antreibenden Fahrmotor (2) enthält und mit einem von einem Drehmotor (22) antreibbaren Drehkopf (15), mit welchem ein Roboterarm (30,43) verbunden ist, der Arbeitswerkzeuge und/oder Inspektionseinrichtungen trägt,
**dadurch gekennzeichnet,**
daß der Roboterarm (30,43) an dem dem Drehkopf (15) abgewandten Ende ein Stützrad (49) zur Aufnahme von Bearbeitungskräften aufweist.

7. Roboter nach Anspruch 6, dadurch gekennzeichnet, daß das Stützrad auf der gegenüberliegenden Seite eines mit dem Roboterarm (30,43) verbundenen Werkzeugträgers (39) angeordnet ist.

8. Roboter nach Anspruch 6 oder 7, dadurch gekennzeichnet, daß das Stützrad (49) um eine senkrecht zur Drehachse (50) verlaufende Achse (A) drehbar ist, so daß sich die Stellung des Stützrades (49) automatisch der Bewegung des Roboterarms (30,43) anpaßt.

9. Roboter nach Anspruch 7 oder 8, dadurch gekennzeichnet, daß der Roboterarmn (30,43) einen Schwenkarm (30) und einen Stützarm (43) aufweist, die gelenkig miteinander verbunden sind.

10. Roboter nach einem der Ansprüche 7-9, dadurch gekennzeichnet, daß zwischen dem Schwenkarm (30) und dem Stützarm (43) ein Doppelgelenk (42,44,45) angeordnet ist, wobei zumindest eines der Gelenke in unterschiedlichen Stellungen feststellbar ist.

11. Roboter nach einem der Ansprüche 8-10, dadurch gekennzeichnet, daß ein Druckzylinder (33) zum Schwenken des Schwenkarms (30) vorgesehen ist.

12. Roboter nach einem der Ansprüche 9-11, dadurch gekennzeichnet, daß an dem Stützarm (43) Zusatzinstrumente (52) anbringbar sind.

13. Roboter nach einem der Ansprüche 6-12, dadurch gekennzeichnet, daß an dem dem Drehkopf (15) zugewandten Ende des Roboterarms (30,43) ein ausfahrbarer Stützfuß (54) angeordnet ist.

14. Roboter nach Anspruch 13, dadurch gekennzeichnet, daß der Stützfuß (54) durch die beim Zustellen des Werkzeugs hervorgerufenen Kräfte entgegen einer Federkraft gegen die Kanalwand gedrückt wird.
